# EUROPÄISCHE PATENTANMELDUNG

(11) **EP 2 674 638 A2**
(43) Veröffentlichungstag der Anmeldung: **18.12.2013**
(21) Anmeldenummer: 13164668.9
(22) Anmeldetag: 22.04.2013
(51) Int. Cl.: F16D 51/08, F16D 55/20, F16D 125/14

(54) **Bremse und Betätigungseinheiten zum Bremsen**

(30) Priorität: 12.06.2012 DE 102012209799
(71) Anmelder: Siemens Aktiengesellschaft, 80333 München (DE)
(72) Erfinder: Bachmaier, Georg, 80469 München (DE); Freitag, Gunter, 81735 München (DE); Gödecke, Andreas, 81677 München (DE); Kuhn, Karl-Josef, 81739 München (DE)

(57) **Zusammenfassung**

Erläutert wird eine Bremse (12), enthaltend:
- einen Balg (72), der eine in das Innere des Balgs (72) führende Öffnung (112) enthält,
- ein mit dem Balg (72) verbundenes Bremselement (116),
- ein Rotationselement (22), das mit Abstand zu dem Bremselement (84) angeordnet ist,
- eine Fluidspeichereinheit (86) oder eine Druckerzeugungseinheit (84),
- einen ersten Kanal (102) zwischen der Fluidspeichereinheit (86) oder der Druckerzeugungseinheit (84) und der Öffnung (112).

## Beschreibung

Die Erfindung bezieht sich auf eine Bremse und auf Betätigungseinheiten zum Bremsen.

Es sind eine Vielzahl von Bremssystemen für Fahrzeuge und auch für andere Zwecke bekannt, z.B. hydraulische Bremssysteme mit zentraler Druckerzeugung und mit zentraler Steuerung. Auf Grund der zentralen Druckerzeugung sind lange Bremsleitungen typisch, die bspw. länger als ein Meter sind. Bekannt sind bspw. Scheibenbremsen mit Bremszylindern oder Trommelbremsen mit Bremsbacken, die ebenfalls durch Bremszylinder betätigt werden.

Die Erfindung betrifft eine Bremse, enthaltend:
- vorzugsweise einen Bremsträger,
- einen vorzugsweise am Bremsträger angeordneten Balg, der eine in das Innere des Balgs führende Öffnung enthält,
- ein mit dem Balg verbundenes Bremselement,
- ein Rotationselement, das mit Abstand zu dem Bremselement angeordnet ist,
- eine Fluidspeichereinheit (Reservoir) oder eine Druckerzeugungseinheit, insbesondere eine bidirektionale Pumpe,
- eine optionale Schalteinheit, z.B. ein Ventil (normal offen, normally open),
- einen ersten Kanal zwischen der Fluidspeichereinheit oder der Druckerzeugungseinheit und der Öffnung.

Auch betrifft die Erfindung eine Betätigungseinheit, enthaltend:
- einen Balg,
- eine in dem Balg angeordnete oder einen Teil des Balgs bildende Fluidspeichereinheit (Reservoir) und/oder Druckerzeugungseinheit, insbesondere eine bidirektionale Pumpe.

Weiterhin betrifft die Erfindung eine Betätigungseinheit enthaltend:
- ein Gehäuse,
- einen an dem Gehäuse angeordneten oder einen Teil des Gehäuses bildenden Balg, der eine Öffnung enthält, die in das Innere des Balgs führt,
- eine in dem Gehäuse angeordnete oder einen Teil des Gehäuses bildende Fluidspeichereinheit (Reservoir) oder Druckerzeugungseinheit, insbesondere eine bidirektionale Pumpe,
- einen in dem Gehäuse angeordneten oder einen Teil des Gehäuses bildenden Kanal, der die Fluidspeichereinheit oder die Druckerzeugungseinheit und die Öffnung verbindet oder der Teil eines Kanalsystems ist, an das die Fluidspeichereinheit oder die Druckerzeugungseinheit und die Öffnung angrenzen.

Es ist Aufgabe der Ausführungsbeispiele eine Bremse anzugeben, die insbesondere einfach aufgebaut ist, die insbesondere einem geringen Verschleiß unterliegt und/oder die insbesondere wartungsarm und haltbar ist. Außerdem sollen Brems-Bestätigungseinheiten und ein zugehöriges Verfahren angegeben werden.

Diese Aufgabe wird durch eine Bremse gemäß Anspruch 1 und durch Bestätigungseinheiten sowie ein Verfahren gemäß den unabhängigen Ansprüchen gelöst. Weiterbildungen sind in den Unteransprüchen angegeben.

Ein Ausführungsbeispiel betrifft eine Bremse, enthaltend:
- vorzugsweise einen Bremsträger,
- einen vorzugsweise am Bremsträger angeordneten Balg, der eine in das Innere des Balgs führende Öffnung enthält,
- ein mit dem Balg verbundenes Bremselement,
- ein Rotationselement, das mit Abstand zu dem Bremselement angeordnet ist,
- eine Fluidspeichereinheit oder eine Druckerzeugungseinheit,
- eine optionale Schalteinheit,
- einen ersten Kanal zwischen der Fluidspeichereinheit oder der Druckerzeugungseinheit und der Öffnung.

Der Balg kann an einem Bremsträger angeordnet sein. Der Bremsträger kann Teil eines Rahmens eines Fahrzeugs sein oder an einem solchen Rahmen befestigt sein. Die Bremse kann zum Verzögern der Geschwindigkeit des Fahrzeugs dienen bzw. zur Arretierung des Fahrzeugs im Stillstand, z.B. wenn das Fahrzeug an einem Hang geparkt wird.

Ein Balg ist im Gegensatz zu einem Bremszylinder dicht, d.h. es kann bspw. kein Öl bzw. Gas austreten oder eintreten und es kann kein Schmutz eintreten. Außerdem gibt es bei einem Balg im Vergleich zu bspw. einem hydraulischen Kolben keine Reibung zwischen einer Kolbenführung und dem Kolben. Beim Balg kann es eine Krümmungsänderung an Segmenten einer Balgwand geben, die eine Längenänderung des Balgs bei Druckerhöhung im Balg bewirkt.

Die Seitenwand des Balgs kann eine Wellenform haben. Alternativ kann der Balg aber auch eine gefaltete Wand haben oder eine Wand aus einzelnen Segmenten, die dann untereinander verbunden sind, bspw. durch Bördeln.

Im Balg kann sich mindestens eine Öffnung oder es können sich mehrere Öffnungen im Balg befinden. Die Öffnungen können zum Eintritt und Austritt eines Fluid dienen, d.h. eines fließenden Mediums. Das Fluid kann vorzugsweise eine Flüssigkeit sein, die im Wesentlichen inkompressibel ist, bspw. im Vergleich zu einem Gas oder zu einem Gasgemisch. Eine Flüssigkeit, d.h. ein hydraulisches System, ermöglicht insbesondere ein sehr schnelles Bremsen.

Das Bremselement kann ein Bremsbelag sein, der bspw. organische Zusätze enthält, wie Harz oder Gummi. Aber auch Sinterwerkstoffe können verwendet werden, insbesondere mit oder ohne organische Zusatzwerkstoffe.

Das Rotationselement kann bspw. eine Bremsscheibe oder eine Bremstrommel sein, d.h. es hat einen geometrischen Aufbau, der eine Drehung ohne Unwucht ermöglicht, d.h. einen ruhigen Lauf.

Die Fluidspeichereinheit wird insbesondere zur Speicherung des Fluids unter hohem Druck verwendet, z.B. mit einem Druck von 1 Bar (Umgebungsdruck auf Meeresspiegelhöhe), größer als 1 Bar, größer als 5 Bar oder größer als 15 Bar. Die Fluidspeichereinheit wird auch als Reservoir bezeichnet. Die Druckerzeugungseinheit kann eine Pumpeinheit sein, insbesondere eine Druckpumpe. Die Druckerzeugungseinheit kann eine bidirektionale Pumpe sein, die einen Fluidtransport in zwei einander entgegengesetzte Richtungen ermöglicht.

Die Fluidspeichereinheit und die Druckerzeugungseinheit können gemeinsam eingesetzt werden, um eine besonders wirksame Bremse zu erhalten. So können bspw. in 5 Millisekunden (ms) mehr als 50 kN (Kilonewton) bzw. 50000 Newton Druck freigesetzt werden. Die Leistung beim Bremsen kann mehr als 1200 Watt je Rad betragen.

Die optionale Schalteinheit kann ein Ventil sein, das bspw. zwei oder mehr als zwei Anschlüsse und bspw. zwei oder mehr als zwei Schaltstellungen hat. Insbesondere wird ein Ventil verwendet, das ohne äußere Spannung offen ist, d.h. einen Fluidtransport ermöglicht. Solche Ventile werden auch als "normal offen" oder "normally open" bezeichnet. Bei Bremsen dienen diese Ventile dazu, die Sicherheitsanforderung zu erfüllen, wonach sich die Bremse bei Spannungsausfall lösen muss.

Die Verwendung eines Balgs, insbesondere eines Metallbalgs bzw. metallischen Balgs, ermöglicht den Aufbau eines in sich geschlossenen Bremssystems, das insbesondere wartungsfrei sein kann, z.B. über eine Zeit von 10 Jahren oder von mehr als zehn Jahren. Insbesondere wird ein Fluid des Bremssystem über eine Zeit von mindestens 10 Jahren nicht ausgewechselt, vorzugsweise auch nicht innerhalb der gesamten Lebensdauer des Produkts.

Ein anderes Ausführungsbeispiel betrifft eine Betätigungseinheit, enthaltend:
- einen Balg,
- eine in dem Balg angeordnete oder einen Teil des Balgs bildende Fluidspeichereinheit und/oder Druckerzeugungseinheit.

Dieses Ausführungsbeispiel beruht auf der Erkenntnis, dass die Einbauten ohnehin für einen hohen Druck ausgelegt sind, der nicht nur von innen sondern auch von außen wirken kann, ohne die Einheiten zu zerstören. So wird bspw. ein Fluidspeicher nicht durch einen hohen Außendruck beeinträchtigt.

Auch die weitere Betätigungseinheit kann in einer Bremse eingesetzt werden, insbesondere in einer Bremse zum Bremsen eines Fahrzeugs oder einer der oben bzw. unten genannten Vorrichtungen.

Bei Ausgestaltungen wird die zweite Betätigungseinheit in Kombination mit einem der unten erläuterten Ausführungsbeispiele bzw. Ausgestaltungen eingesetzt. Somit gelten die unten genannten technischen Wirkungen entsprechend.

Die Fluidspeichereinheit bzw. die Druckerzeugungseinheit und der Kanal bilden insbesondere dann einen Teil des Balgs, wenn eine ihrer Außenwände einen Bestandteil der Außenwand des Balgs bildet.

Die technische Wirkung einer Anordnung von Einbauten in dem Balg kann darin bestehen, dass bei kompakter Bauweise die mechanische Steifigkeit des Balgs erhöht wird, weil er weniger Fluid enthält, dass im Vergleich zu den Einbauten leichter kompressibler ist. So können die Einbauten mehr als 50 Prozent des Innenvolumens des Balgs einnehmen.

Der Balg kann ein metallisches Material enthalten oder aus einem metallischen Material hergestellt sein, insbesondere aus einem Metall. Ein Metall ist elektrisch leitfähig. Damit kann der Balg bspw. galvanisch hergestellt werden. Die Form eines metallischen Kerns kann die Form des Balgs beim Galvanisieren vorgeben. Galvanisiert wird bspw. mit Außenstrom. Der Kern kann nach dem Galvanisieren bspw. mit einer Chemikalie aufgelöst und damit entfernt werden. Auch Schichten aus voneinander verschiedenen Materialien lassen sich aufgalvanisieren.

Zur Herstellung des Balgs können aber auch andere Metallbearbeitungsverfahren verwendet werden, wie Ziehen oder Umformen. Typische Metalle für Bälge sind Eisenverbindungen, insbesondere, Stahl, Nickelverbindungen usw.

Es können aber auch andere hochfeste Materialien eingesetzt werden.

Bei einer Ausgestaltung kann der Balg einen dehnbaren Abschnitt enthalten. Der dehnbare Abschnitt kann eine umlaufende Seitenwand enthalten, bei der sich der Abstand von einander gegenüberliegenden Stellen mit zunehmendem Abstand zur Öffnung mehrmals vergrößert und wieder verkleinert, insbesondere periodisch, z.B. mehr als zweimal, mehr als drei mal oder mehr als viermal. Insbesondere wird ein Balg mit wellenförmiger Wand verwendet. Aber auch Faltenbälge oder andere Bälge sind geeignet. Der Durchmesser eines Balgs mit kreisrundem Querschnitt kann sich bei konstanter Länge des Balgs bspw. um mehr als 1 Millimeter oder um mehr als 5 Millimeter ändern, d.h. bspw. gemäß einer Wellenlinie. Die Wandstärke der Wand kann dabei im Wesentlichen gleich bleiben, z.B. mit Schwankungen kleiner als 1 Millimeter (mm) oder kleiner als 0,1 Millimeter.

Die Wandstärke liegt bspw. im Bereich zwischen 0,2 Millimeter (mm) bis 2 Millimeter. Der Abstand von einander gegenüberliegenden Wandstellen liegt bspw. zwischen 5 Zentimetern und 10 Zentimetern.

Es kann auch ein Balg mit einer Doppelwand, Dreifachwand usw. eingesetzt werden.

Der Balg mit dem Bremselement kann ein erster Balg sein. Die Fluidspeichereinheit kann einen zweiten Balg enthalten. Damit wird das Konstruktionselement Balg sowohl zur Fluidspeicherung als auch zum Betätigen der Bremse verwendet. Beide Bälge können aufeinander abgestimmt sein, bspw. hinsichtlich des gleichen Drucks und gleicher Speicher- bzw. Arbeitsvolumina. Es können in der Bremse auch mehr als zwei Bälge verwendet werden, bspw. ein größere Balg in der Fluidspeichereinheit und zwei oder mehr als zwei kleinere Bälge zum Bremsen an einem Rad.

Der zweite Balg kann ebenfalls ein metallisches Material enthalten oder aus einem metallischen Material hergestellt sein, insbesondere aus einem Metall. Bezüglich der Herstellung des zweiten Balgs können die oben für den ersten Balg angegebenen Verfahren verwendet werden.

Bei einer Ausgestaltung kann der zweite Balg einen dehnbaren Abschnitt enthalten. Der dehnbare Abschnitt kann eine umlaufende Seitenwand enthalten, bei der sich der Abstand von einander gegenüberliegenden Stellen mit zunehmendem Abstand zur Öffnung mehrmals vergrößert und wieder verkleinert, insbesondere periodisch, z.B. mehr als zweimal, mehr als drei mal oder mehr als viermal. Insbesondere wird ein zweiter Balg mit wellenförmiger Wand verwendet. Aber auch Faltenbälge oder andere Bälge sind geeignet. Der Durchmesser eines Balgs mit kreisrundem Querschnitt kann sich bspw. bei konstant bleibender Länge des Balgs um mehr als 1 Millimeter oder um mehr als 5 Millimeter ändern. Die Wandstärke der Wand kann dabei im Wesentlichen gleich bleiben, z.B. mit Schwankungen kleiner als 1 Millimeter (mm) oder kleiner als 0,1 Millimeter.

Die Wandstärke des zweiten Balgs liegt bspw. im Bereich zwischen 0,2 Millimeter bis 2 Millimeter. Der Abstand einander gegenüberliegender Seitenwände liegt bspw. zwischen 5 Zentimetern und 10 Zentimetern oder zwischen 5 Zentimetern und 15 Zentimetern.

Es kann auch ein zweiter Balg mit einer Doppelwand, Dreifachwand usw. eingesetzt werden.

Der zweite Balg kann größer als der erste Balg ausgeführt sein, insbesondere wenn an dem Fluidspeicher mehr als ein Balg betrieben wird.

Das Rotationselement kann eine kreisförmige Scheibe oder eine Trommel sein. Damit tritt bei der Rotation keine Unwucht auf. Die Trommel enthält ebenfalls eine kreisrunde Scheibe an der in Umfangsrichtung in einem Winkel von vorzugsweise 90 Winkelgrad eine Wand angeordnet sein kann.

Damit handelt es sich bei der Bremse um eine Scheibenbremse bzw. eine Trommelbremse mit sehr guten Bremseigenschaften. Die kreisförmige Scheibe kann frei von Aussparungen sein oder Aussparungen enthalten, z.B. zur Kühlung oder zur Verringerung des Gewichts.

Die Schalteinheit kann ein Ventil sein. Insbesondere kann ein elektrisch betätigtes Ventil verwendet werden, z.B. ein 2/2-Wegeventil, d.h. ein Ventil mit zwei Fluidanschlüssen und mit zwei Schaltstellungen.

Die Bremse kann eine Pumpeinheit zusätzlich zu den Fluidspeichereinheit enthalten oder die Druckerzeugungseinheit kann eine Pumpeinheit sein oder enthalten. Zwischen der Pumpeinheit und der Druckerzeugungseinheit kann sich ein dritter Kanal befinden in dem Fall, in dem eine Fluidspeichereinheit vorhanden ist.

Als Pumpeinheit kann eine Kolbenpumpe, eine Schraubenpumpe oder eine Membranpumpe verwendet werden. Im Fall einer Kolbenpumpe oder Membranpumpe kann die Pumpe auch Ventile enthalten, die die Richtung des Fluids beim Pumpen vorgeben. Membranpumpen mit Piezokristall können verwendet werden. Piezokristalle ermöglichen die Erzeugung einer hohen Kraft und damit eines hohen Drucks bei hoher Schaltdynamik. Außerdem erlauben Piezokristalle das Erzeugen von hohen Drücken. Piezokristalle lassen sich auf einfache Art kapseln, bspw. unter Verwendung eines weiteren Balgs. Alternativ kann bspw. ein Lorentzaktuator als Pumpeinheit verwendet werden.

Bei einer Ausgestaltung enthält die Pumpeinheit eine Druckpumpe, die eine Druck größer als 10 Megapascal (MPa) oder größer als 10 Bar erzeugen kann. Die Druckpumpe kann eine Membranpumpe sein, insbesondere ein Membranpumpe, die durch einen Piezokristall angetrieben wird.

Bei einer Ausgestaltung kann ein vierter Kanal zwischen der Pumpeinheit und der Öffnung angeordnet sein. Beispielsweise kann sich durch den vierten Kanal ein Kreislauf im Kanalsystem ergeben.

Die Bremse kann eine Antriebseinheit für die Pumpeinheit enthalten. Bei einer Ausgestaltung enthält die Antriebseinheit einen Piezokristall, der auch über Jahrzehnte wartungsfrei ist. Aber auch ein Elektromotor kann als Antrieb verwendet werden.

Die Bremse kann ein Gehäuse enthalten, das die Fluidspeichereinheit, die optionale Schalteinheit und den ersten Kanal enthält.

Das Gehäuse kann gekapselt sein, d.h. es bildet eine Kapsel um die genannten Einheiten herum. Durch die gekapselte Bauweise kann das Fluid lange verwendet werden, bspw. über eine Zeit die größer ist als 10 Jahre. Insbesondere werden die Fließeigenschaften des Fluids nicht durch eindringende Luft oder Feuchtigkeit herabgesetzt. Auch ein Verschmutzen des Fluids ist ausgeschlossen durch die Kapselung. Weiterhin können sich auf Grund der Kapselung keine Luft- oder Gasblasen im Bremssystem bilden, so dass die volle Bremswirkung über die gesamte Betriebsdauer von bspw. mehr als zehn Jahren erhalten bleibt.

Die Pumpeinheit und ggf. auch die Antriebseinheit kann ebenfalls innerhalb des Gehäuses angeordnet werden. Alternativ kann insbesondere bei einer Membranpumpe, die Membran einen Teil des gekapselten Gehäuses bilden. Die Antriebseinheit kann dann auf einfache Art außerhalb des Gehäuses an der Membran angeordnet werden, bspw. ein Piezokristall.

Das Gehäuse kann metallisch dicht sein oder metallisch dicht mit dem Balg verbunden sein. Metallisch dicht bedeutet hier, dass ein Wasserdurchtritt und/oder ein Gasdurchtritt unterbunden ist. So kann selbst nach zehn Jahren die Sperrwirkung noch vorhanden sein und gewährleisten, dass das Fluid unbeeinträchtigte Gebrauchseigenschaften hat.

Beispiele für metallisch dichte Verbindung sind bspw. Löten und Schweißen. Aber auch eine einstückige Herstellung von Balg und Gehäuse kann erfolgen, bspw. mit galvanischen Verfahren.

Bei einer Ausgestaltung hat das Gehäuse mindestens eine Durchführung für einen elektrisch leitenden Anschluss. Weil an der Durchführung keine mechanische Bewegung übertragen werden muss, kann die Durchführung gut abgedichtet werden, bspw. mit einem aushärtenden Kunststoff.

An dem elektrisch leitenden Anschluss werden bspw. Steuersignale nach einem der folgenden Protokolle übertragen:
- FlexRay,
- Profinet,
- CAN-Bus (Controller Area Network),
- Ethernet (IEEE 802.x), bzw.
- LIN (Local Interconnect Network).

Alternativ dient der Anschluss als Energieversorgung einer Antriebseinheit für eine Pumpe oder eine Antriebseinheit für die Schalteinheit, bspw. für einen Elektromagneten.

Bei einer nächsten Ausgestaltung wird die Bremse in einem elektrisch angetriebenen Fahrzeug, d.h. in einem Elektrofahrzeug, eingesetzt. In diesen Fahrzeugen kann durch Energierückspeisung des Elektromotors gebremst werden. Damit können mechanische Bremsen kleiner ausgelegt werden. Die Bremskraft von kleinen Balgbremsen kann bereits ausreichend sein, bspw. um den Bremsvorgang zu unterstützen oder um nach Art einer Feststellbremse ein Wegrollen des Fahrzeugs am Hang zu unterbinden.

Die Bremse kann in oder an einem Radnabenmotor angeordnet sein. Radnabenmotore sind besonders kompakt aufgebaute Elektromotoren. An einem Rad können sich so alle mechanischen bzw. alle Fluideinheiten befinden, die zum Bremsen benötigt werden. Diese Einheiten können kompakt angeordnet und insbesondere gekapselt werden. Lediglich die Stromversorgung bzw. Steuersignale können von einer zentralen Steuerung kommen.

Bei einem Radnabenmotor handelt es sich um einen Elektromotor, der in ein Rad eines Fahrzeugs integriert ist. Die Wicklungen des Motors können mit untereinander gleichem Abstand zur Radnabe angeordnet sein, insbesondere in Nachbarschaft zu dem Umfang einer Felge, d.h. zentrisch.

Am Radnabenmotor sind die Einheiten bzw. Elemente der Bremse besonderen Belastungen und besonderen Umweltbedingungen ausgesetzt, bspw. im Vergleich zu einer Anordnung im Innenraum eines Fahrzeugs. Deshalb kann eine Kapselung besonders wirkungsvoll sein. Der für die Bremse verbleibende Bauraum ist an einem Radnabenmotor besonders klein, bspw. im Vergleich zu dem Bauraum bei einem Fahrzeug mit Zentralmotor. Die Einheiten der Bremse können jedoch sehr kompakt zueinander angeordnet werden. Die kompakte Bauweise erlaubt auch kurze Ansprechzeiten der Bremse auf Grund der kurzen hydraulischen Wege.

Die Bremse kann jedoch allgemein für Elektrofahrzeuge, Brennstofffahrzeuge oder Hybridfahrzeuge eingesetzt werden, d.h. einem kombinierten Antrieb, z.B. Elektromotor und Verbrennungsmotor. Auch eine kleine Balgbremsen kann insbesondere bei Leichtfahrzeugen bzw. Leichtbauweise ausreichend hohe Bremskräfte zur Verfügung stellen.

Die Bremse kann auch für andere Anwendungen eingesetzt werden, insbesondere Anwendungen, die eine kompakte und/oder gekapselte Bauweise benötigen, wie z.B. Bremsen für Windräder oder Bremsen für Flugzeugräder.

Der Balg kann einen nicht kreisförmigen Querschnitt enthalten oder haben. Der nicht kreisförmige Querschnitt liegt insbesondere in einer Ebene, die parallel zu einer ebenen Bodenfläche und/oder zu einer ebenen Deckfläche/ Verschlussfläche des Balgs liegt. Durch den nicht kreisförmigen Querschnitt kann der Balg bspw. an die Bogenform am Umfang einer Bremsscheibe oder Bremstrommel angepasst werden. Es ergeben sich effektive und kompakte Anordnungen zum Übertragen hoher Bremskräfte.

Alternativ werden aber auch Bälge mit kreisförmigem Querschnitt verwendet, an denen das Bremsmaterial befestigt ist.

Bei einer Ausgestaltung enthält die Bremse eine bspw. elektrische oder elektronische Steuereinheit oder eine Regelungseinheit. Die Steuereinheit oder die Regelungseinheit kann außerhalb des Gehäuses oder ebenfalls gekapselt in dem Gehäuse angeordnet werden.

Die Steuereinheit oder die Regelungseinheit gewährleistet bspw. ein blockierungsfreies Bremsen.

Die Steuereinheit oder die Regelungseinheit kann mit einer zentralen Steuer/Regelungseinheit in Verbindung stehen, insbesondere über eines der oben genannten Bussysteme bzw. Protokolle.

Bei einer Ausgestaltung sind die Fluidspeichereinheit bzw. die Druckerzeugungseinheit, die Schalteinheit und die Pumpeinheit von einem Reifen umschlossen im Inneren eines Rades eines Fahrzeugs angeordnet. Damit sind diese Einheiten genau einem Rad zugeordnet, im Unterschied zu bekannten Einheiten, die bspw. für das gleichzeitige Bremsen an zwei oder an vier Rädern verwendet werden. Das Rad kann von einem Radnabenmotor oder von einem anderen Motor angetrieben werden, insbesondere von einem Motor, der mehr als ein Rad antreibt.

Der Abstand zwischen Fluidspeichereinheit oder Druckerzeugungseinheit und Balg kann kleiner als 15 Zentimeter sein.

Durch diese Maßnahme ergeben sich kurze Fluidwege, insbesondere kurze hydraulische Wege. Die gesamte Kanallänge der Bremse für ein Rad ist bspw. kürzer als 20 Zentimeter oder kürzer als 30 Zentimeter. Die kurzen Wege erlauben eine hohe Bremsdynamik sowohl beim Betätigen als auch beim Lösen der Bremse.

Ein anderes Ausführungsbeispiel betrifft eine Betätigungseinheit, enthaltend:
- ein Gehäuse,
- einen an dem Gehäuse angeordneten oder einen Teil des Gehäuses bildenden Balg, der eine Öffnung enthält, die in das Innere des Balgs führt,
- eine in dem Gehäuse angeordnete oder einen Teil des Gehäuses bildende Fluidspeichereinheit oder Druckerzeugungseinheit,
- einen in dem Gehäuse angeordneten oder einen Teil des Gehäuses bildenden Kanal, der die Fluidspeichereinheit oder die Druckerzeugungseinheit und die Öffnung verbindet oder der Teil eines Kanalsystems ist, an das die Fluidspeichereinheit oder die Druckerzeugungseinheit und die Öffnung angrenzen.

Für die Betätigungseinheit gelten insbesondere die oben für die Bremse genannten technischen Wirkungen, d.h. sie ist für eine einfach aufgebaute Bremse geeignet, die insbesondere eine lange Haltbarkeit hat und wartungsarm ist.

Die Betätigungseinheit kann bei einer Ausgestaltung Bestandteil einer Bremse sein, insbesondere in einem Radnabenmotor.

Der Balg, die Fluidspeichereinheit bzw. die Druckerzeugungseinheit und der Kanal bilden insbesondere dann einen Teil des Gehäuses, wenn eine ihrer Außenwände einen Bestandteil der Außenwand des Gehäuses bildet.

Bei Ausgestaltungen wird die Betätigungseinheit in Kombination mit einem der oben erläuterten Ausführungsbeispiele bzw. Ausgestaltungen eingesetzt. Somit gelten die oben genannten technischen Wirkungen entsprechend.

Die Bremse oder die Betätigungseinheit kann eine Schalteinheit enthalten, insbesondere eine Schalteinheit die in einem spannungslosen Zustand einen Kanal für ein Fluid öffnet. Somit lassen sich Sicherheitsanforderungen an Bremsen bzw. Betätigungseinheiten auf einfache Art erfüllen.

Mit anderen Worten ausgedrückt, kann eine gekapselte elektrohydraulische Metallbalgbremse eingesetzt werden.

Die Elektrifizierung des Autos bedeutet auch ein Ansteuern der Aktoren im Fahrzeug durch elektrische Signale. In einem Fahrzeug werden heute die Bremsen bzw. die Bremsbacken bspw. hydraulisch angesteuert. Dabei werden alle Bremsen durch ein zentrales Bremssteuergerät hydraulisch gesteuert. Neue E-/E-Architekturen (Elektrische/Elektronische) im Fahrzeug können ein zentrales Fahrzeugsteuergerät im Fahrzeug haben und alle Aktoren im Fahrzeug mit elektrischen Signalen steuern.

Ein herkömmliches hydraulisches System bedarf immer noch der Wartung. Das Medium, das eingesetzt wird, unterliegt der Alterung und muss entsorgt werden. Dabei fallen Flüssigkeiten an, die durchaus umweltschädigend sind. Gerade für elektrische Fahrzeuge ist die Rekuperation interessant, weil Energie wieder gewonnen und direkt für das Fahren verwendet werden kann. Um das effizient zu tun, kann eine Steuerung entscheiden, welchen Bremsaktor sie ansteuert. Letztlich kann eine Break-by-Wire Bremse notwendig sein.

Ein zentrales Bremssteuergerät kann den Hydraulikdruck für alle vier Bremsen im Fahrzeug steuern und regeln. Der Fahrer kann immer noch den mechanischen Durchgriff auf die Bremsen haben. D.h., dass das Bremssteuergerät deshalb nicht den Fahrerwunsch übersteuern kann. Es können im Fahrzeug hydraulische Leitungen verbaut werden, die die Bremsen Aktuieren. Parallel dazu können im Fahrzeug elektrische Leitungen verlegt werden, oft zu den gleichen Aktoren, um Statusinformationen rückzumelden. Die Bremsflüssigkeit muss bei bisherigen Lösungen von Zeit zu Zeit ausgetauscht werden.

Verschiedene Wege wurden bereits untersucht, um die Bremse mit elektrischen Signalen anzusteuern:
- Keilbremse (EWB = Electronic Wedge Brake),
- Hebelübersetzung, und
- Kugelspindeltrieb.

Der Brems-Cantilever kann gemäß einem Ausführungsbeispiel mit einem gekapselten hydraulischen Metallbalg betätigt werden. Druckerzeugung, z.B. durch Piezoelement, Druckzwischenspeicherung und die Krafterzeugung können so miniaturisiert werden, dass sie Platz in einem Metallbalg finden. Im Metallbalg kann sich das komplette hydraulische System befinden, also die Druckerzeugung, Druckzwischenspeicherung und die Krafterzeugung. Der Metallbalg und/oder ein mit ihm verbundenes Gehäuse kann metallisch dicht sein. Die hydraulische Flüssigkeit ist deshalb vollständig metallisch dicht gekapselt. Die hydraulischen Wege im System selbst sind sehr klein, insbesondere kleiner als 15 Zentimeter, so dass sich schnelle Ansprechzeiten realisieren lassen. Die Ansteuerung des Balgs kann nur über die elektrischen Signale und über eine elektrische Energieversorgung erfolgen.

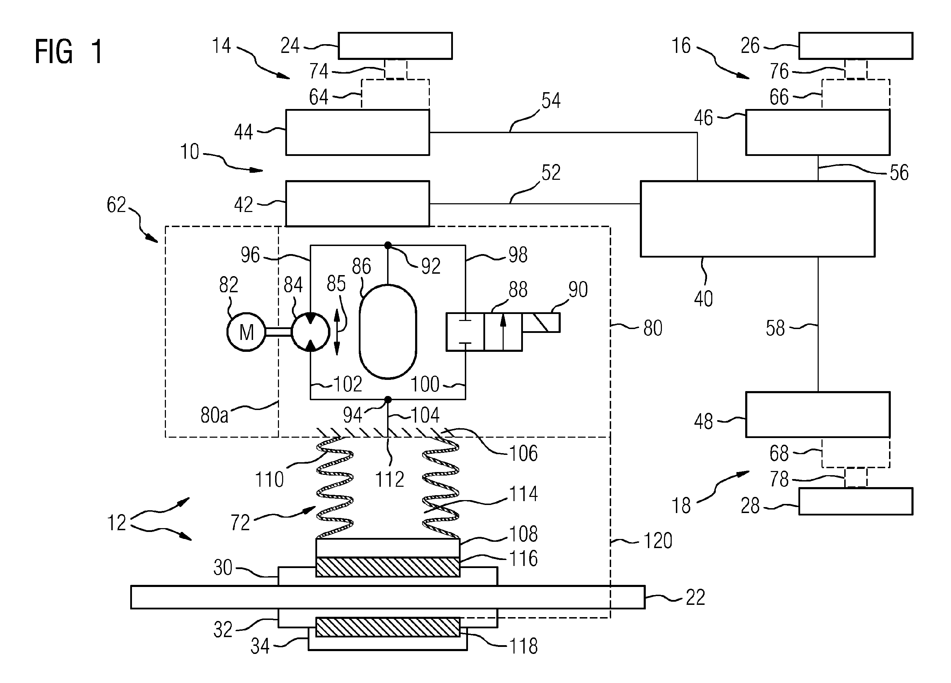

In der Figur 1 wird der prinzipielle Aufbau dargestellt. Für jede einzelne Reibbremse im Fahrzeug kann nun ein solcher Aktor zum Betätigen verwendet werden.

Es können sich die folgenden technischen Wirkungen ergeben:
- die Ansteuerung der Bremsaktoren kann elektrisch erfolgen und zwar unabhängig von den anderen Bremsaktoren,
- die Bremsflüssigkeit muss nicht mehr ausgetauscht werden, weil keine bzw. nur eine geringe Alterung der hydraulischen Flüssigkeit durch metallische dichte Komponenten auftritt, d.h. keine Wasseraufnahme, keine Gasdiffusion,
- schneller Bremsdruckaufbau durch hohe hydraulische Steifigkeit, weil keine hydraulischen Leitung im gesamten Fahrzeug verbaut werden müssen,
- keine/geringe Alterung der hydraulischen Flüssigkeit durch metallische dichte Komponenten, d.h. keine Wasseraufnahme, keine Gasdiffusion,
- gutes Schwingungsverhalten durch hohe Eigendämpfung der hydraulischen Flüssigkeit, und
- hohe Robustheit durch Einsatz von Festlagern und damit geringe Anzahl von Reibpaarungen bzw. Führungen.

Die in der Einleitung genannten Ausführungsbeispiele und Weiterbildungen können auch untereinander und mit den an Hand der Figuren erläuterten Ausführungsbeispielen kombiniert werden.

Im Folgenden werden Ausführungsbeispiele der Erfindung an Hand der beiliegenden Zeichnungen erläutert. Darin zeigen:
- Figur 1: ein Fahrzeug mit Balgbremsen und Radmodul-Hydraulik,
- Figur 2: einen Radnabenmotor mit Balgbremse,
- Figur 3: eine Trommelbremse mit Balgbetätigungseinheit,
- Figur 4: eine Fluidspeichereinheit,
- Figur 5: eine Querschnitt durch die Seitenwand eines Metallwellenbalgs,
- Figur 6: eine Balgbremse mit zwei einander zugewandten Bälgen, und
- Figur 7: eine Balgbremse mit in den Balg eingebauten Einbauten.

Die Figur 1 zeigt ein Fahrzeug 10 mit vier Balgbremsen und Radmodul-Hydraulik. Das Fahrzeug 10 ist bspw. ein Auto, z.B. für den Transport von bis zu fünf Personen. Alternativ können die erläuterten Balgbremsen auch bei Zweirädern eingesetzt werden, wie Fahrrädern, Mopeds und Motorrädern. Bei anderen Ausführungsbeispielen werden die Balgbremsen auch bei Nutzfahrzeugen eingesetzt, wie Lastkraftwägen.

Das Fahrzeug 10 ist bspw. ein Auto mit Elektroantrieb, mit Verbrennungsmotor oder mit einem Hybridantrieb aus diesen beiden Motorarten.

Das Fahrzeug 10 enthält:
- eine Scheibenbremse 12, vorn, links,
- eine Scheibenbremse 14, vorn, rechts,
- eine Scheibenbremse 16, hinten, rechts, und
- eine Scheibenbremse 18, hinten, links.

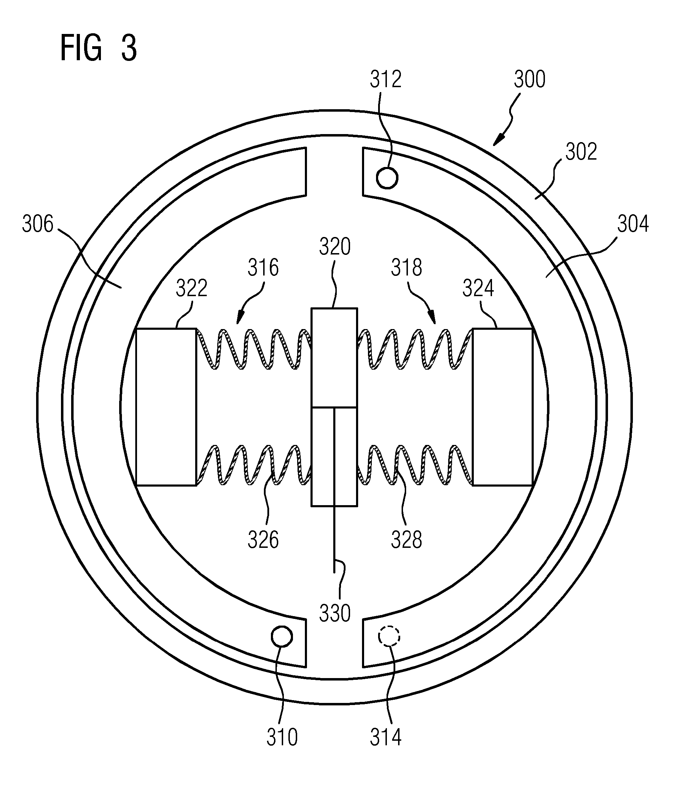

An Stelle aller oder ausgewählter Scheibenbremsen 12 bis 18 können auch andere Bremsen eingesetzt werden, die mit einem Balg betätigt werden, insbesondere mit einem Metallbalg, siehe bspw. die Trommelbremse in Figur 3.

Die Scheibenbremse 12 enthält eine Bremsscheibe 22. Die Scheibenbremse 14 enthält eine Bremsscheibe 24. Entsprechend enthält die Scheibenbremse 16 eine Bremsscheibe 26 und die Scheibenbremse 18 eine Bremsscheibe 28. Die Bremsscheiben 22 bis 28 bestehen bspw. aus Eisen oder aus Stahl.

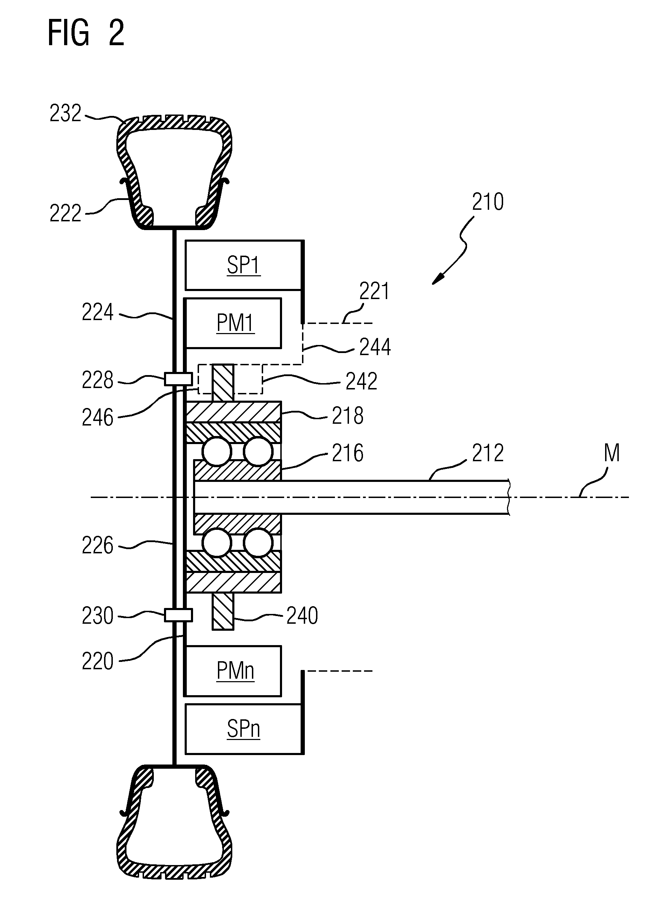

Die Scheibenbremse 12 wird im Folgenden näher erläutert. Die anderen Scheibenbremsen 14 bis 18 sind wie die Scheibenbremse 12 aufgebaut. Die Scheibenbremse 12 enthält zwei Befestigungselemente 30 und 32, mit denen die Bremsscheibe mittig auf einer Achse bzw. an einem Rad befestigt ist. Die Figur 2 zeigt Details einer Befestigungsvariante der Bremsscheibe 22 bei einem Innenläufer-Radnabenmotor. Andere Motoren, insbesondere andere Elektromotoren lassen sich ebenfalls zum Antreiben des Rades verwenden.

Das Befestigungselement 34 ist bspw. eine Abstandsscheibe zum Rad hin.

Das Fahrzeug 10 enthält außerdem ein zentrales Bremssteuergerät 40, das bspw. einfach oder redundant ausgeführt ist. Das zentrale Bremssteuergerät 40 enthält einen nicht dargestellten Prozessor und eine Speichereinheit, in der Befehle und Daten gespeichert sind. Die Befehle werden durch den Prozessor ausgeführt. Alternativ kann eine zentrale Steuereinheit ohne Prozessor verwendet werden.

Das zentrale Bremssteuergerät 40 wandelt bspw. den Stellweg eines Bremspedals in ein elektrisches Signal um. Darüber hinaus kann das zentrale Bremssteuergerät 40 im Rahmen von automatischen Fahrerassistenzsystemen auch ein automatisches Bremsen einleiten.

An jedem Rad des Fahrzeugs 10 gibt es außerdem ein Radmodul-Steuergerät 42 bis 48. Das Steuergerät 42 ist dem linken Vorderrad zugeordnet und erfüllt bspw. Aufgaben zur Steuerung bzw. Regelung der Bremskraft, bspw. im Rahmen eines ABS - Steuerverfahrens (Anti Blockier System) oder eines ESP - Verfahrens (Elektronisches Stabilisierungs**p**rogramm). Die Steuergeräte 44, 46 und 48 sind wie das Steuergerät 42 aufgebaut. Die Steuergeräte 44, 46 und 48 sind in dieser Reihenfolge dem rechten Vorderrad, dem rechten Hinterrad und dem linken Hinterrad zugeordnet. Die Steuergerät 42 bis 48 können jeweils einen nicht dargestellten Prozessor und eine Speichereinheit enthalten, in der Befehle und Daten gespeichert sind. Die Befehle werden durch den Prozessor ausgeführt. Alternativ können Radmodul-Steuereinheiten 42 bis 48 ohne Prozessor verwendet werden.

Es gibt die folgenden Datenübertragungsverbindungen vom zentralen Steuergerät 40 zu den Radmodul-Steuergeräten 42, 44, 46 und 48:
- eine Datenübertragungsverbindung 52 zu dem Steuergerät 42,
- eine Datenübertragungsverbindung 54 zu dem Steuergerät 44,
- eine Datenübertragungsverbindung 56 zu dem Steuergerät 46, und
- eine Datenübertragungsverbindung 58 zu dem Steuergerät 48.

Die Datenübertragungsverbindungen 52 bis 58 können leitungsgebunden sein, wobei bspw. die in der Einleitung genannten Protokolle verwendet werden.

Jedem Rad des Fahrzeugs 10 ist außerdem ein Hydraulikmodul 62 bis 68 zugeordnet. Das Hydraulikmodul 62 ist am linken Vorderrad angeordnet. Die Hydraulikmodule 64, 66 und 68 sind in dieser Reihenfolge dem rechten Vorderrad, dem rechten Hinterrad und dem linken Hinterrad zugeordnet. Die Hydraulikmodule 64, 66 und 68 sind wie das Hydraulikmodul 62 aufgebaut und werden deshalb im Folgenden nicht näher erläutert.

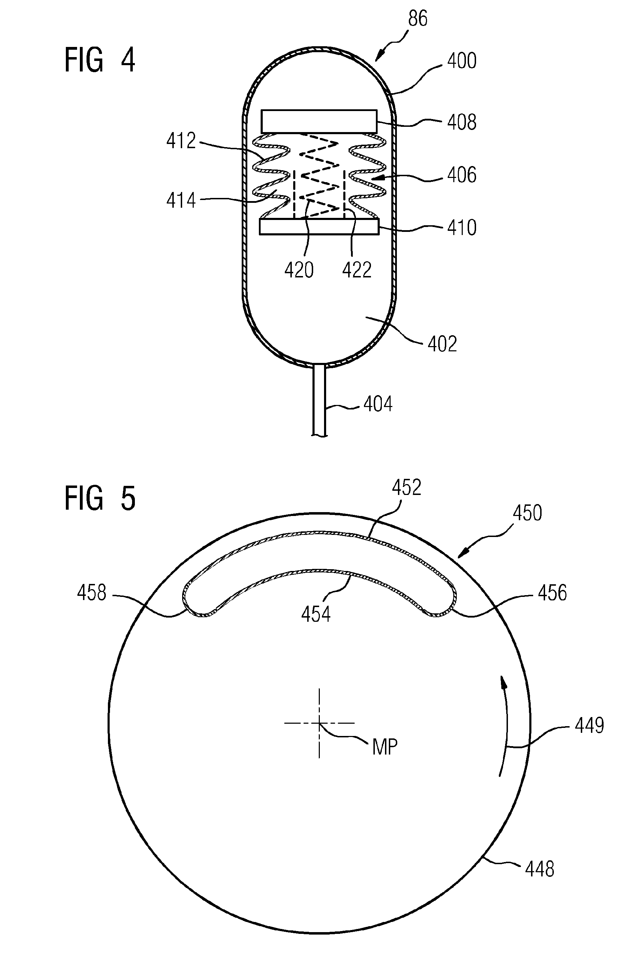

Das Hydraulikmodul 62 enthält:
- einen Metallbalg 72,
- ein Gehäuse 80, das insbesondere metallisch dicht mit dem Metallbalg 72 verbunden ist,
- einen Pumpenmotor 82, der bspw. im Gehäuse 80 angeordnet ist,
- eine vorzugsweise bidirektional betreibbare Pumpe 84 (siehe Pfeil 85), die bspw. ebenfalls im Gehäuse 80 angeordnet ist und die vom Pumpenmotor 82 angetrieben wird,
- einen Fluidspeicher 86, der im Gehäuse 80 angeordnet ist und dessen Aufbau unten an Hand der Figur 4 für ein Beispiel näher erläutert wird,
- ein Ventil 88, das auch als Schalteinheit bzw. als hydraulische Schalteinheit bezeichnet wird und das ebenfalls im Gehäuse 80 angeordnet ist,
- einen Elektromagneten 90, der zur Betätigung des Ventils 88 dient und der ebenfalls im Gehäuse 80 angeordnet ist.

Im Gehäuse 80 gibt es außerdem noch ein hydraulisches Kanalsystem, das die folgenden Bestandteile enthält:
- zwei Verzweigungen 92 und 94, alternativ kann ein anderes Kanalsystem verwendet werden,
- eine Leitung bzw. einen Kanal 96 von der Pumpe 84 zu der Verzweigung 92,
- eine Leitung 98 zwischen der Verzweigung 92 und dem Ventil 88,
- eine Leitung 100 zwischen dem Ventil 88 und der Verzweigung 94,
- eine Leitung 102 zwischen der Verzweigung 94 und der Pumpe 84, und
- eine Leitung 104 zwischen der Verzweigung 94 und einem Anschluss 112 des Balgs 72.

Die Fluidspeichereinheit 86 ist ebenfalls an die Verzweigung 92 angeschlossen.

Der Balg 72 enthält:
- einen Balgverschluss 106, z.B. eine metallische Platte bzw. Scheibe,
- einen Balgboden 108, z.B. eine metallische Platte bzw. Scheibe,
- eine umlaufende Metallwellenwand 110,
- eine Einlassöffnung 112, und
- einen Balginnenraum 114, der insbesondere mit einem Fluid gefüllt ist, bspw. mit Öl, insbesondere einem Silikonöl oder einem Öl auf Glyzerinbasis.

Der Balgverschluss 106 bzw. der Balgboden 108 können mit verschiedenen Verbindungstechniken mit der Wand 110 verbunden sein, z.B. Löten, Schweißen, Pressen, Bördeln usw. Auch eine einstückige Herstellung von Balgboden 108 und Balgwand 110 oder von Balgverschluss 106, Balgboden 108 und von Balgwand 110 ist möglich, bspw. unter Nutzung von galvanischen Verfahren.

Am Balgboden 108 des Balgs 72 ist ein Bremsbelag 116 befestigt, bspw. unter Verwendung von lösbaren Befestigungselementen und/oder von Klebstoff.

Ein Gegen-Bremsbelag 118 ist dem Balg 72 gegenüberliegend auf der anderen Seite der Bremsscheibe 22 angeordnet, bspw. über eine Befestigung 120.

Dem Metallbalg 72 entsprechende Metallbälge 74 bis 78 sind auch an den anderen Scheibenbremsen 14, 16 und 18 angeordnet.

Bei einem alternativen Ausführungsbeispiel wird an Stelle des Gehäuses 80 ein kleineres Gehäuse 80a eingesetzt. Das Gehäuse 80a umschließt die Pumpe 84 zumindest in Teilen, die Fluidspeichereinheit 92 und auch das Ventil 88. Jedoch umschließt das Gehäuse 80a nicht den Pumpenmotor 82 bzw. den Pumpenantrieb. Das Gehäuse 80a kann insbesondere beim Einsatz einer Membranpumpe verwendet werden, bei der die Membran durch einen Kolben bzw. Stößel bzw. einen Piezokristall in Bewegung gesetzt wird.

An Stelle des Pumpenmotors lässt sich auch ein anderer Antrieb verwenden, bspw. ein Piezokristall, insbesondere ein gekapselter Piezokristall.

Beim Betrieb des Fahrzeugs 10 wird zunächst das Ventil 88 in die in der Figur dargestellte geschlossene Stellung geschaltet. Im Fehlerfall liegt dann bspw. keine elektrische Spannung mehr an dem Elektromagneten 90 des Ventils 88 an, woraufhin ein nicht dargestelltes Federelement das Ventil in eine geschlossene Stellung zurück drückt. Damit kann durch die Rückstellkraft des Balgs Fluid aus dem Balg in die Fluidspeichereinheit 86 fließen. Die Bremse ist damit eigensicher und es tritt im Fehlerfall keine Bremskraft auf.

Bei der Erzeugung eines Bremssignals auf der Datenübertragungsverbindung 52 wird durch das Steuergerät 42 die Pumpe 84 so angesteuert, dass Fluid aus der Fluidspeichereinheit 86 in den Balg 72 gedrückt wird. Damit wird das Bremsmaterial 116 an die Bremsscheibe 22 gedrückt und ein Bremsen bewirkt.

Am Ende des Bremsvorgang tritt bspw. ein elektrisches Signal auf der Datenübertragungsverbindung 52 auf, das das Radmodul-Steuergerät 42 dazu veranlasst, die Pumpe 84 in umgekehrte Richtung zu Betreiben, so dass ein Druckabbau im Balg 72 stattfindet, indem Flüssigkeit aus dem Balg in den Fluidspeicher 86 gepumpt wird.

Typische Arbeitsdrücke der Bremse liegen bspw. im Bereich von 10 bis 10 Bar.

Die Scheibenbremsen 12 bis 18 sind bspw. Schwimmsattelbremsen oder auch Festsattelbremsen.

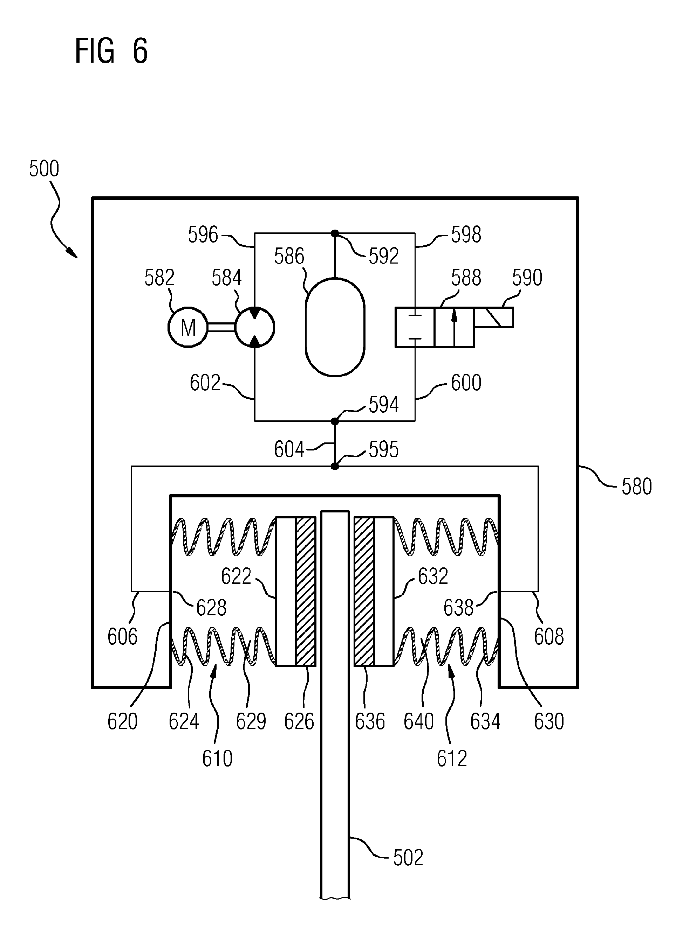

Es können bei dem Fahrzeug 10 auch mehrere Bälge je Scheibenbremse verwendet werden, siehe bspw. Figur 6. Alternativ werden mehrere Bälge auf einer Seite der Bremsscheibe angeordnet.

Nachstelleinheiten können vorgesehen werden, die der Abnutzung von Bremsbelägen Rechnung tragen. Die Nachführung kann aber auch dadurch erfolgen, dass der Balg 72 so ausgelegt wird, dass die Nachführung über die Auslenkung des Balgs 72 bewirkt wird.

Die Figur 2 zeigt einen Radnabenmotor 210, der auf einer Fahrzeugachse 212 angeordnet ist. Es handelt sich bspw. um einen Innenläufermotor. Der Radnabenmotor 210 hat eine Balgbremse 242.

Ein Radiallager 216 ist mit seiner Innenseite auf der Fahrzeugachse 212 befestigt und an seiner Außenseite in einem Lagerblock 218 gelagert bzw. befestigt. Eine Läuferbasis-Scheibe 220 hat bspw. einen kreisförmigen Umfang und kann die Seitenwand eines Läufergehäuses bilden. Am Umfang der Scheibe 220 sind Permanentmagnete PM1 bis PMn angebracht, z.B. 212 Stück. Typischerweise können zwischen 100 und 250 Permanentmagnete verwendet werden.

Ein Statorgehäuse 221, trägt Spulen bzw. Wicklungen SP1 bis SPn, z.B. 212 oder 224 Wicklungen, die im Folgenden auch mit W1 bis Wn bezeichnet werden.

Am Innenläufer bzw. Rotor, genauer an der Scheibe 220 ist eine Verbund aus einer Felge 222, einem Radkranz 224 und einem Radflansch befestigt mit Hilfe von Radschrauben 228, 230 bzw. Radmuttern. Ein Reifen 232 wird von der Felge 222 getragen bzw. stützt sich auf der Felge 222 ab.

Der Radnabenmotor 210 kann eine Abmessung entlang seiner Mittelachse M haben, die kleiner als sein Durchmesser ist, insbesondere kleiner als die Hälfte des Durchmessers. Die Länge wird bspw. durch die Länge der Spulen SP1 vorgegeben oder durch die Länge eines Gehäuses. Der Durchmesser wird bspw. durch die Lage der äußeren Flächen der Spulen SP1 bis SPn vorgeben oder durch ein Gehäuse.

An Stelle des Radnabenmotors 210 kann auch ein anderer Radnabenmotor verwendet werden, z.B. mit Käfigläufer (Kurzschlussringläufer). An Stelle eines Radnabenmotors 210 mit Innenläufer kann auch ein Radnabenmotor mit Außenläufer verwendet werden, der Permanentmagnete oder einen Kurzschlussringläufer enthält.

Es lassen sich aber auch andere Elektromotore verwenden, insbesondere ein Asynchronmotor oder ein Synchronmotor mit einer Länge in Längsrichtung der Drehachse, wobei die Länge größer als ein Außendurchmesser des betreffenden Elektromotors ist. Auch elektronisch kommutierte Gleichstrommotoren können eingesetzt werden.

Der Elektromotor kann in einer Transportmaschine oder einer anderen Maschine verwendet werden, z.B. in einer Werkzeugmaschine o.ä. Dieselben Prinzipien lassen sich nicht nur zum Bremsen von Motoren sondern auch zum Bremsen von Generatoren anwenden.

Eine der Bremsscheibe 22 entsprechende Bremsscheibe 240 ist bspw. außen am Lagerblock 218 befestigt. Ein dem Balg 72 entsprechender Metallbalg 242 ist bspw. mit Hilfe eines Bremsträgers 244 an dem Statorgehäuse 221 angeordnet bzw. fest mit einem Fahrzeugrahmen verbunden. Bei der Befestigung kann auch ein dem Gehäuse 80 bzw. 80a entsprechendes Gehäuse einbezogen werden. Das Gehäuse 80 bzw. 80a ist bspw. aus einem Metall oder einem metallischen Material hergestellt, insbesondere aus Stahl.

Ein Gegen-Bremsbelag 246 ist ebenfalls am Fahrzeuggehäuse befestigt.

Auch die in Figur 2 dargestellte Scheibenbremse kann eine Schwimmsattelbremse oder eine Festsattelbremse sein. Alternativ kann eine Trommelbremse in dem Radnabenmotor 210 verwendet werden, siehe bspw. Figur 3.

Die Ansteuerung der Bremse des Radnabenmotors 210 erfolgt bspw. so, wie oben an Hand der Figur 1 erläutert, d.h. durch ein Radmodul-Steuergerät und ein zentrales Bremssteuergerät.

Die in Figur 2 dargestellte Bremse kann auch für ein Rad ohne Radmotor bzw. ohne Radnabenmotor eingesetzt werden, insbesondere bei einem zentrale Elektroantrieb, Hybridantrieb oder Verbrennungsmotorantrieb.

Die Figur 3 zeigt eine Trommelbremse 300 mit Balgbetätigungseinheit. Die Trommelbremse 300 enthält:
- eine Bremstrommel 302,
- zwei bogenförmig gekrümmte Bremsbacken 304, 306, die am Umfang der Wand der Bremstrommel 302 angeordnet sind,
- zwei Lagerbolzen 310 und 312 zum Lagern der Bremsbacken 304, 306, und
- zwei Metallbälge 316, 318.

Die beiden Metallbälge 316, 318 werden durch eine gemeinsame Verschlussscheibe 320 verschlossen.

Der Metallbalg 316 enthält:
- einen Balgboden 322,
- eine Wand, z.B. eine Metallwellenwand 326, sowie
- einen Teil der Verschlussscheibe 320.

Der Metallbalg 318 enthält:
- einen Balgboden 324,
- eine Wand, z.B. eine Metallwellenwand 328, sowie
- einen Teil der Verschlussscheibe 320.

In der Verschlussscheibe 320 ist ein Hydraulikkanal 330 angeordnet, der zu beiden Bälgen 316 und 318 hin verzweigt.

Der Metallbalg 316 stützt sich mit seinem Boden an der Bremsbacke 306 ab. Der Metallbalg 318 stützt sich dagegen mit seinem Boden an der Bremsbacke 304 ab.

Durch die in der Figur 3 dargestellte Anordnung der Lagerbolzen 310 und 312 sind beide Bremsbacken 304, 306 abhängig von der Drehrichtung entweder auflaufend oder ablaufend.

Die Trommelbremse 300 bremst, indem durch den Hydraulikkanal 330 ein Druck aufgebaut wird, der die Bälge 316 und 318 verlängert, wodurch die Bremsbacken 304 und 306 nach außen gegen die sich drehende Trommel 302 gedrückt wird und die Bremswirkung einsetzt. Wird der Druck in dem Hydraulikkanal 330 abgebaut, so wirkt eine Rückstellkraft der Balgwände 326, 328 bzw. zusätzlicher optionaler Rückstellelemente, wie z.B. eine Schraubenfeder.

Bei einer Variante wird an Stelle des Lagerbolzens 312 ein Lagerbolzen 314 verwendet, d.h. die Bremsbacken 304, 306 sind aneinander benachbarten Enden gelagert. In diesem Fall ist abhängig von der Drehrichtung immer eine Bremsbacke 304, 306 auflaufend und eine Bremsbacke ablaufend.

Die Trommelbremse kann eine Simplexbremse, eine Duplexbremse oder eine Duo-Servobremse sein. Die Bälge können sich auch an den Enden der Bremsbacken abstützen. Es können mehr als zwei Bälge hintereinander und/oder auch parallel zueinander angeordnet werden. Auch Ausführungsbeispiele mit nur einem Balg sind möglich.

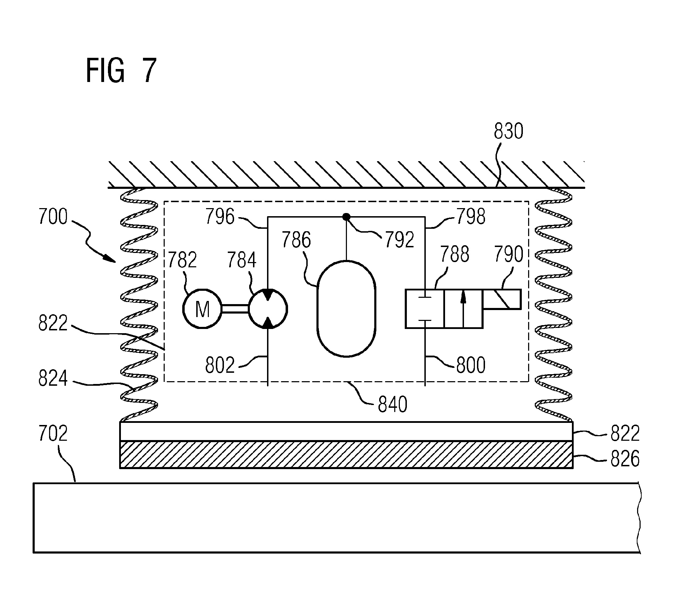

Auch die Komponenten der Hydraulikeinheit können im Innern der Bremstrommel 302 angeordnet werden, insbesondere außerhalb der Bälge oder auch innerhalb der Bälge, siehe Figur 7. Ein metallisch dichtes Gehäuse kann die Hydraulikeinheit umschließen und bspw. an die Bälge angrenzen.

Die Figur 4 zeigt eine Fluidspeichereinheit, die bspw. der Fluidspeichereinheit 86 entspricht. Die Fluidspeichereinheit 86 enthält:
- eine metallische Fluidspeicherwand 400, die bspw. oval ist bzw. zylinderförmig mit halbkugelförmigem oder abgerundetem Boden bzw. Decke,
- einen Fluidspeicherinnenraum 402,
- eine Anschlussleitung 404, und
- mindestens einen Metallbalg 406, der bspw. auch einstückig ausgebildet werden kann.

Der Metallbalg 406 enthält:
- eine Verschlussscheibe 408,
- einen Balgboden 410,
- einen Metallwellenwand 412, und
- einen Balginnenraum 414.

Im Innern des Balgs 406 kann eine optionale Schraubenfeder 420 angeordnet sein. Alternativ können an Stelle der Schraubenfeder 420 andere Federelemente verwendet werden, bspw. Tellerfedern.

Im Balg 406 kann eine optionale Führung 422 für die Schraubenfeder 420 oder für die anderen Federelement angeordnet sein, bspw. ein Führungsrohr.

Der Innenraum des Balgs 406 kann mit Luft oder mit einem Gas gefüllt sein. Ein Gasanschluss oder eine Entlüftungs- bzw. Belüftungsanschluss kann nach außen geführt sein, muss aber nicht. Ein geeignetes Gas ist bspw. Stickstoff oder Luft. Im Innenraum des Balgs 406 kann atmosphärischen Druck herrschen oder ein anderer Druck.

Im Betrieb der Fluidspeichereinheit 86 wird der Balg 406 durch einen äußeren Druck zusammengepresst, so dass Fluid in der Fluidspeichereinheit 86 gespeichert werden kann. Wird dem Druck eine Möglichkeit zum Entweichen aus der Fluidspeichereinheit 86 gegeben bzw. wird das Fluid abgepumpt, so kann der Balg 406 ggf. unterstützt durch die Federelemente das Austreten der Flüssigkeit aus dem Innenraum 402 des Fluidspeichers in die Anschlussleitung 404 unterstützen.

Die Figur 5 zeigt einen Querschnitt durch die Seitenwand eines Metallwellenbalgs 450, z.B. des Balgs 72, 610, 622, 700.

Der Querschnitt des Metallwellenbalgs 450 ist an eine Bremsscheibe 448 angepasst, die sich um einen Mittelpunkt MP dreht, siehe Pfeil 449. Die Ebene, in der der dargestellte Querschnitt liegt, liegt parallel zu einem nicht dargestellten Balgverschluss bzw. zu einem nicht dargestellten Balgboden.

Der Metallwellenbalg 450 enthält:
- eine bogenförmig gekrümmte Außenwand 452, die einen ersten Krümmungsradius hat,
- eine bogenförmig gekrümmte Innenwand 454, die einen zweiten Krümmungsradius hat, der kleiner als der erste Krümmungsradius ist,
- eine gekrümmte rechte Seitenwand 456, und
- eine gekrümmte linke Seitenwand 458.

Der erste Krümmungsradius stimmt bspw. mit dem Radius überein, an dem die Außenwand 452 bezüglich der Bremsscheibe 448 angeordnet ist. Ebenso stimmt bspw. der zweite Krümmungsradius mit dem Radius überein, an dem die Innenwand 454 bezüglich der Bremsscheibe 448 angeordnet ist, d.h. mit dem Abstand vom Mittelpunkt MP bis zur Innenwand 454 bei der in Figur 5 dargestellten Ansicht auf die Bremsscheibe 448.

Alternativ können Bälge 72, 610, 622, 700 mit kreisförmigem Querschnitt verwendet werden. Auch im Fall einer Trommelbremse kann der Balg in Umfangsrichtung der Trommelwand gestreckt werden.

Die Figur 6 zeigt eine Balgbremse 500 mit zwei einander zugewandten Bälgen 610 und 612, d.h. eine Festsattelbremse. Ein Gehäuse 580 umgibt ein Hydraulikmodul, das bspw. dem Hydraulikmodul 62 entspricht und das die folgenden Einheiten enthält:
- einen Pumpenmotor 582, der bspw. im Gehäuse 580 angeordnet ist,
- eine Pumpe 584, die bspw. ebenfalls im Gehäuse 580 angeordnet ist und die vom Pumpenmotor 582 angetrieben wird,
- eine Fluidspeichereinheit 586 (Reservoir), die im Gehäuse 580 angeordnet ist und deren Aufbau bspw. dem oben an Hand der Figur 4 erläuterten Beispiel entspricht,
- ein Ventil 588, das auch als Schalteinheit bzw. als hydraulische Schalteinheit bezeichnet wird und das ebenfalls im Gehäuse 580 angeordnet ist,
- einen Elektromagneten 590, der zur Betätigung des Ventils 588 dient und der ebenfalls im Gehäuse 80 angeordnet ist.

Das Ventil 588 ist bspw. ein "nomally open" Ventil.

Im Gehäuse 580 gibt es außerdem noch ein hydraulisches Kanalsystem, das die folgenden Bestandteile enthält:
- drei Verzweigungen 592, 594 und 595, alternativ kann ein anderes Kanalsystem verwendet werden,
- eine Leitung bzw. einen Kanal 596 von der Pumpe 584 zu der Verzweigung 292,
- eine Leitung 598 zwischen der Verzweigung 592 und dem Ventil 588,
- eine Leitung 600 zwischen dem Ventil 588 und der Verzweigung 594,
- eine Leitung 602 zwischen der Verzweigung 594 und der Pumpe 584, und
- eine Leitung 604 zwischen der Verzweigung 594 und der Verzweigung 595,
- eine Leitung 606 zwischen dem Balg 610 und der Verzweigung 595, und
- eine Leitung 608 zwischen dem Balg 612 und der Verzweigung 595.

Die Fluidspeichereinheit 586 ist ebenfalls an die Verzweigung 592 angeschlossen.

Der Balg 610 enthält:
- einen Balgverschluss 620, z.B. eine metallische Platte bzw. Scheibe,
- einen Balgboden 622, z.B. eine metallische Platte bzw. Scheibe,
- eine umlaufende Metallwellenwand 624,
- eine Einlassöffnung 628, und
- einen Balginnenraum 629, der insbesondere mit einem Fluid gefüllt ist, bspw. mit Öl, insbesondere einem Silikonöl oder einem Öl auf Glyzerinbasis.

Am Balgboden 622 des Balgs 610 ist ein Bremsbelag 626 befestigt.

Der Balg 612 enthält:
- einen Balgverschluss 630, z.B. eine metallische Platte bzw. Scheibe,
- einen Balgboden 632, z.B. eine metallische Platte bzw. Scheibe,
- eine umlaufende Metallwellenwand 634,
- eine Einlassöffnung 638, und
- einen Balginnenraum 640, der insbesondere mit einem Fluid gefüllt ist, bspw. mit Öl, insbesondere einem Silikonöl oder einem Öl auf Glyzerinbasis.

Am Balgboden 632 des Balgs 612 ist ein Bremsbelag 636 befestigt.

Die Balgbremse 500 ist als Scheibenbremse 500 ausgestaltet. Eine Bremsscheibe 502 ist zwischen den beiden Bälgen 610 und 612 angeordnet. Das Gehäuse 580 umgreift die Bremsscheibe 502.

Die Balgbremse 500 funktioniert im Wesentlichen wie die Bremse 12, siehe Ausführungen zu Figur 1.

Wieder kann die Balgbremse 500 als Festsattelbremse oder als Schwimmsattelbremse ausgebildet sein. Bei einer Variante kann der Pumpenmotor 582 bzw. eine andere Pumpenantriebseinheit, z.B. Piezokristall, außerhalb des Gehäuses 580 angeordnet sein, insbesondere im Fall einer Membranpumpe, deren Membran Teil des Gehäuses 580 ist.

Der Balg 610 bzw. 612 kann einen kreisförmigen Querschnitt in eine Ebene haben, die parallel zum Balgverschluss 620 bzw. parallel zum Balgboden 622 liegt. Alternativ wird ein Balg mit an die Bremsscheibe oder an eine Bremstrommel angepassten Querschnitt verwendet, siehe Figur 5.

Es kann auch nur ein Balg 610 oder 612 verwendet werden mit einem Bremsbelag als Gegenstück, insbesondere bei schwimmender Lagerung des Gehäuses 580.

Die Figur 7 zeigt ein Balgbremse 700 mit in den Balg eingebauten Einbauten. Ein Gehäuse wird demzufolge durch einen Balgboden 822, eine Balgwand 824 und einen Balgverschluss 830 gebildet, wobei der Balgboden 822, die Balgwand 824 und der Balgverschluss 830 auch einstückig ausgeführt werden können. Der Vorteil der Balgbremse 700 kann darin bestehen, dass bei kompakter Bauweise die mechanische Steifigkeit des Balgs der Balgbremse durch die inkompressiblen Einbauten erhöht wird.

Der Balg der Balgbremse 700 umgibt ein Hydraulikmodul, das bspw. dem Hydraulikmodul 62 entspricht und das die folgenden Einheiten enthält:
- einen Pumpenmotor 782, der bspw. im Balg der Balgbremse 700 angeordnet ist,
- eine Pumpe 784, die bspw. ebenfalls im Balg der Balgbremse 700 angeordnet ist und die vom Pumpenmotor 782 angetrieben wird,
- einen Fluidspeicher 786, der im Balg der Balgbremse 700 angeordnet ist und dessen Aufbau bspw. dem oben an Hand der Figur 4 erläuterten Beispiel entspricht,
- ein Ventil 788, das auch als Schalteinheit bzw. als hydraulische Schalteinheit bezeichnet wird und das ebenfalls im Balg der Balgbremse 700 angeordnet ist,
- ein Elektromagnet 790, der zur Betätigung des Ventils 788 dient und der ebenfalls im Gehäuse 80 angeordnet ist.

Im Balg der Balgbremse 700 gibt es außerdem noch ein hydraulisches Kanalsystem, das die folgenden Bestandteile enthält:
- ein Verzweigungen 792, alternativ kann ein anderes Kanalsystem verwendet werden,
- eine Leitung bzw. einen Kanal 796 von der Pumpe 784 zu der Verzweigung 792,
- eine Leitung bzw. einen Kanal 798 zwischen der Verzweigung 792 und dem Ventil 788,
- eine optionale Leitung bzw. einen Kanal 800 zwischen dem Ventil 588 und einem dem Balgboden 822 zugewandten Teil des Innenraums 832 des Balgs der Balgbremse 700, und
- eine optionale Leitung bzw. einen Kanal 802 zwischen dem dem Balgboden 822 zugewandten Teil des Innenraums 832 und der Pumpe 784.

Das Ventil 788 kann auch direkt in den Balginnenraum 832 münden, wenn keine Leitung bzw. kein Kanal 800 vorgesehen ist. Ebenso kann die Pumpe 834 direkt an den Balginnenraum 832 angeschlossen sein, wenn keine Leitung bzw. kein Kanal 802 vorgesehen ist.

Die Fluidspeichereinheit 886 ist ebenfalls an die Verzweigung 892 angeschlossen.

Der Balg der Balgbremse 700 enthält:
- den Balgverschluss 830, z.B. eine metallische Platte bzw. Scheibe ohne Öffnung für eine Flüssigkeit,
- den Balgboden 822, z.B. eine metallische Platte bzw. Scheibe ebenfalls ohne eine Öffnung für eine Flüssigkeit,
- eine umlaufende Metallwellenwand 824, die ebenfalls keine Öffnung für den Durchtritt einer Flüssigkeit enthält, und
- einen Balginnenraum 832, der insbesondere im wesentlichen vollständig, d.h. abgesehen von den Einbauten, mit einem Fluid gefüllt ist, bspw. mit Öl, insbesondere einem Silikonöl oder einem Öl auf Glyzerinbasis.

Am Balgboden 822 des Balgs der Balgbremse 700 ist ein Bremsbelag 826 befestigt.

Die Balgbremse 700 ist als Scheibenbremse 700 ausgestaltet. Eine Bremsscheibe 802 ist am Balg der Balgbremse 700 angeordnet.

Es kann eine Kapselung 840 geben, die die Einbauten umschließt, d.h. eine Art Innengehäuse. Alternativ kann der Motor 782, ggf. ein Teil der Pumpe 784 und/oder der Elektromagnet 790 des Ventils 788 auch außerhalb des Balgs der Balgbremse 700 angeordnet werden, bspw. im Bereich des Balgverschlusses 830.

Die Balgbremse 700 funktioniert im Wesentlichen wie die Bremse 12, siehe Ausführungen zu Figur 1.

Wieder kann die Balgbremse 700 als Festsattelbremse oder als Schwimmsattelbremse ausgebildet sein. Bei einer Variante kann der Pumpenmotor 782 bzw. eine andere Pumpenantriebseinheit, z.B. Piezokristall, außerhalb des Balgs angeordnet sein, insbesondere im Fall einer Membranpumpe, deren Membran Teil des Balgs ist.

Der Balg der Balgbremse 700 kann einen kreisförmigen Querschnitt in eine Ebene haben, die parallel zum Balgverschluss 830 bzw. parallel zum Balgboden 822 liegt. Alternativ wird ein Balg mit an die Bremsscheibe oder an eine Bremstrommel angepassten Querschnitt verwendet, siehe Figur 5.

Der Balg 830 kann auch die Bremsscheibe 702 umgreifend ausgebildet werden. Im Balg Balgbremse 700 können auch andere Kanäle ausgebildet sein.

Die Balgbremse 700 kann auch bei einer Trommelbremse verwendet werden, siehe Figur 3. Bspw. werden dann mehrere Bälge verwendet, in denen sich jeweils Einbauten befinden. Alternativ kann ein lang gestreckter Balg verwendet werden, in dem sich die Einbauten befinden.

Die an Hand der Figuren erläuterten Ausführungsbeispiele können insbesondere mit den in der Einleitung genannten Ausführungsbeispielen kombiniert werden. Die Ausführungsbeispiele sind nicht maßstabsgetreu und nicht beschränkend. Abwandlungen im Rahmen des fachmännischen Handelns sind möglich. Obwohl die Erfindung im Detail durch das bevorzugte Ausführungsbeispiel näher illustriert und beschrieben worden ist, ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Bremse (12), enthaltend
einen Balg (72), der eine in das Innere des Balgs (72) führende Öffnung (112) enthält,
ein mit dem Balg (72) verbundenes Bremselement (116),
ein Rotationselement (22), das mit Abstand zu dem Bremselement (84) angeordnet ist,
eine Fluidspeichereinheit (86) oder eine Druckerzeugungseinheit (84),
einen ersten Kanal (96, 98) zwischen der Fluidspeichereinheit (86) oder der Druckerzeugungseinheit (84) und der Öffnung (112) .

2. Betätigungseinheit (700), enthaltend
einen Balg (824),
eine in dem Balg (824) angeordnete oder einen Teil des Balgs (824) bildenden Fluidspeichereinheit (786) und/oder Druckerzeugungseinheit (784).

3. Bremse (12) oder Betätigungseinheit (700) nach Anspruch 1 oder 2, wobei der Balg (72) ein metallisches Material enthält oder aus einem metallischen Material hergestellt ist, insbesondere aus einem Metall.

4. Bremse (12) oder Betätigungseinheit (700) nach einem der vorhergehenden Ansprüche, wobei der Balg (72) ein erster Balg ist und wobei die Fluidspeichereinheit (86) einen zweiten Balg (406) enthält.

5. Bremse (12) oder Betätigungseinheit (700) nach Anspruch 4, wobei der zweite Balg (406) ein metallisches Material enthält oder aus einem metallischen Material hergestellt ist, insbesondere aus einem Metall.

6. Bremse (12) oder Betätigungseinheit (700) nach einem der vorhergehenden Ansprüche, wobei das Rotationselement (22) eine kreisförmige Scheibe (22) oder eine Trommel (302) ist.

7. Bremse (12) oder Betätigungseinheit (700) nach einem der vorhergehenden Ansprüche, wobei die Schalteinheit (88) ein Ventil ist.

8. Bremse (12) oder Betätigungseinheit (700) nach einem der vorhergehenden Ansprüche, enthaltend eine Pumpeinheit (84) zusätzlich zu den Fluidspeichereinheit (86) oder wobei die Druckerzeugungseinheit eine Pumpeinheit (84) ist oder enthält.

9. Bremse (12) oder Betätigungseinheit (700) nach Anspruch 8, enthaltend eine Antriebseinheit (82) für die Pumpeinheit.

10. Bremse (12) oder Betätigungseinheit (700) nach einem der vorhergehenden Ansprüche, soweit auf Anspruch 1 rückbezogen, enthaltend ein Gehäuse (80), das die Fluidspeichereinheit (86), die Schalteinheit (88), den ersten Kanal (96, 98) und den zweiten Kanal (100) enthält.

11. Bremse (12) oder Betätigungseinheit (700) nach Anspruch 10, wobei das Gehäuse (80) metallisch dicht ist oder metallisch dicht mit dem Balg (72) verbunden ist.

12. Bremse (12) oder Betätigungseinheit (700) nach einem der vorhergehenden Ansprüche, wobei der Balg (72) einen nicht kreisförmigen Querschnitt enthält oder hat.

13. Bremse (12) oder Betätigungseinheit (700) nach einem der vorhergehenden Ansprüche, wobei der Abstand zwischen Fluidspeichereinheit (86) oder Druckerzeugungseinheit (84) und dem Balg (72) kleiner als 15 Zentimeter ist.

14. Betätigungseinheit (62), enthaltend
ein Gehäuse (80),
einen an dem Gehäuse (80) angeordneten oder einen Teil des Gehäuses (80) bildenden Balg (72), der eine Öffnung (112) enthält, die in das Innere (114) des Balgs (72) führt,
eine in dem Gehäuse (80) angeordnete oder einen Teil des Gehäuses (80) bildende Fluidspeichereinheit (86) oder Druckerzeugungseinheit (84),
einen in dem Gehäuse (80) angeordneten oder einen Teil des Gehäuses (80) bildenden Kanal (96, 98, 100), der die Fluidspeichereinheit oder die Druckerzeugungseinheit (84) und die Öffnung (112) verbindet oder der Teil eines Kanalsystems (96, 98, 100) ist, an das die Fluidspeichereinheit (86) oder die Druckerzeugungseinheit (84) und die Öffnung (112) angrenzen.

15. Bremse (12) oder Betätigungseinheit (62, 700) nach einem der vorhergehenden Ansprüche enthaltend eine Schalteinheit (88), insbesondere eine Schalteinheit, die in einem spannungslosen Zustand einen Kanal für ein Fluid öffnet.
